(19) Europäisches Patentamt / European Patent Office / Office européen des brevets

(11) **EP 2 957 592 B1**

(12) **EUROPEAN PATENT SPECIFICATION**

(45) Date of publication and mention
of the grant of the patent:
**09.11.2016 Bulletin 2016/45**

(51) Int Cl.:
*C08L 7/00* (2006.01)     *B60C 1/00* (2006.01)
*C08L 23/22* (2006.01)     *C08L 23/28* (2006.01)
*B60C 5/14* (2006.01)     *C08K 5/11* (2006.01)

(21) Application number: **15172141.2**

(22) Date of filing: **15.06.2015**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2014 JP 2014124713
06.04.2015 JP 2015077887**

(43) Date of publication of application:
**23.12.2015 Bulletin 2015/52**

(73) Proprietor: **SUMITOMO RUBBER INDUSTRIES,
LTD.
Kobe-shi, Hyogo-ken, 651-0072 (JP)**

(72) Inventor: **MIYAZAKI, Tatsuya
Kobe-shi,, Hyogo 651-0072 (JP)**

(74) Representative: **Manitz, Finsterwald & Partner
GbR
Martin-Greif-Strasse 1
80336 München (DE)**

(56) References cited:
**EP-A1- 2 108 526     WO-A1-2004/044052
WO-A1-2006/071311     WO-A1-2012/106027
US-A- 5 005 625**

**Description**

TECHNICAL FIELD

The present invention relates to a tire having an inner liner composed of a predetermined rubber composition.

BACKGROUND OF THE INVENTION

With respect to an inner liner rubber composition, the amount of process oil such as paraffin oil is increased in order to improve tackiness to a component adjacent to an inner liner in unvulcanized stage and tackiness between inner liners in unvulcanized stage (namely, tackiness during building). However, this instance has a problem that air barrier propertiy of the inner liner obtained is not sufficient. Particularly, the paraffin oil has advantages of being excellent in compatibility with a butyl rubber and then lowering a glass-transition temperature (Tg), and improving sheet extrudability, namely, smoothing a sheet extrudate and linearizing its edge. Meanwhile, it has a disadvantage of lowering air barrier property, and thus the reduction of the compounded amount is desired.

To improve air barrier property of an inner liner, it is known that a mixed resin with a softening point of 101°C or higher or a terpene resin with a softening point of 120 to 130°C is compounded in place of a part or the whole of paraffin oil. However, this method has a problem that the Tg and the brittle temperature of the rubber composition increase.

The brittle temperature of the tire rubber composition is closely related to durability of tires used in an extremely cold region, and the brittle temperature of the rubber composition for a tread of a tire used in an extremely cold region in a severe cold season is generally set to -35°C or lower. Also, the Tg of the inner liner rubber composition is preferably set to -35°C or lower. However, if this is difficult, the occurrence of a crack is prevented by lowering a complex modulus (E*) at low temperature, for example, at -40°C that is a freezing cold temperature in the market to ensure durability of a tire.

JP 2013-236876 A discloses that a tire having an inner liner composed of a rubber composition for an inner liner comprising a specific resin including a mixed resin is provided, and that the occurrence of a crack is prevented by lowering low temperature E* by preparing a rubber composition for an inner liner comprising 30 to 46 parts by mass of a specific reinforcing filler based on 100 parts by mass of a rubber component, but does not consider the Tg and the brittle temperature of the rubber composition.

WO 2006/009002 and JP 2008-038028 A disclose a rubber composition for an inner liner wherein a phosphoric ester low-temperature plasticizer is comprised into a butyl rubber component to improve air barrier property and crack resistance at low temperature. However, since phosphorus resource contained in phosphoric ester low-temperature plasticizer is eccentrically-located in four countries in the world and tends to drain, the cost of phosphorus resource increases. Phosphorus resource is also important as a fertilizer and an industrial basic material. Accordingly, a plasticizer without relying on phosphorus resource is required in the rubber industry in terms of ensuring phosphorus resource and reducing cost.

WO 2006/071311 A1 relates to an article made from at least one cured elastomeric composition including 70 to 97 phr of at least one halogenated isobutylene based elastomer and 30 to 3 phr of a secondary elastomer, wherein the article has a brittleness point of about -48°C or less. This article shall be usable for a plurality of applications and in particular as an inner liner of a pneumatic tire.

WO 2004/044052 A1 discloses a rubber composition having a brittleness temperature below -36°C and an air permeability of less than 4.0 x 10-8 cm$^3$ · cm/cm$^2$ · sec · atm, which shall be suitable to be used among others in an innerliner of a tire.

EP 2 108 526 A1 relates to a pneumatic tire having an innerliner made of a rubber composition including a butyl rubber, ethylene vinyl alcohol polymer and a reinforcing filler.

WO 2012/106027 A1 discloses a tire innerliner comprising a dynamically vulcanized alloy of an elastomer and an engineering resin. For example, an innerliner composition is disclosed, which includes nylon, brominated poly-isobutylene-co-p-methylstyrene with butyl-benzylsulfonamide, maleated ethylene-ethylacrylate, talc and additives, such as zinc oxide, zinc stearate, stearic acid and copper iodide.

SUMMARY OF THE INVENTION

An object of the present invention is to provide a tire having an inner liner composed of a rubber composition without relying on phosphorus resource and being excellent in air barrier property and crack resistance at low temperature.

As a result of keen examination to solve the above problems, the inventor has found that the above problems can be solved by preparing a tire having an inner liner composed of a rubber composition comprising a predetermined rubber component, an aliphatic dibasic acid ester, and a resin with a predetermined softening point, and having a predetermined brittle temperature. By further examinations, the inventor has reached the present invention.

Namely, the present invention relates to a tire having an inner liner composed of a rubber composition comprising

1 to 30 parts by mass of an aliphatic dibasic acid ester and 8 to 30 parts by mass of a resin with a softening point of 60°C or higher, based on 100 parts by mass of a rubber component including at least one selected from the group consisting of butyl rubber, halogenated butyl rubber, and isoprene-based rubber, wherein the rubber composition has a brittle temperature of -35°C or lower.

Preferably, the content of the butyl rubber and/or halogenated butyl rubber in the rubber component is 81 to 100% by mass.

Preferably, the content of an epoxidized natural rubber with an epoxidation rate of 10 to 50 mol% in the rubber component is 90% by mass or more.

Preferably, the resin comprises 5 to 20 parts by mass of a mixed resin.

Preferably, the theoretical molecular weight of the aliphatic dibasic acid ester is 150 or more, and the flash point thereof is 100°C or higher.

Preferably, the carbon number of an alcohol substituent of the aliphatic dibasic acid ester is 5 or more.

The present invention can provide a tire without relying on phosphorus resource and being excellent in air barrier property and crack resistance at low temperature by preparing a tire having an inner liner composed of a rubber composition comprising a predetermined rubber component, an aliphatic dibasic acid ester, and a resin with a predetermined softening point, and having a predetermined brittle temperature.

DETAILED DESCRIPTION

The tire of the present invention is a tire having an inner liner composed of a rubber composition comprising a predetermined rubber component, an aliphatic dibasic acid ester, and a resin with a predetermined softening point.

<Rubber Component>

The rubber component of the rubber composition according to the present invention includes at least one selected from the group consisting of butyl rubber (IIR), halogenated butyl rubber (X-IIR), and isoprene-based rubber.

The butyl rubber (IIR) refers to a non-halogenated butyl rubber known as so-called a regular butyl rubber or a reclaimed butyl-based rubber. Those generally used in the tire industry can be suitably used as the IIR.

The reclaimed butyl-based rubber refers to ground particles of a rubber product that contains a large amount of butyl rubber(s), such as a tire tube or a bladder used in the production of tires, or a devulcanized ground particles, which is a revulcanizable rubber component obtained by break of crosslinking bonds of the rubber composition of the ground particles. Generally, about 50% by mass of the reclaimed butyl-based rubber corresponds to the butyl rubber fraction. The reclaimed butyl-based rubber contains sulfur as well, but the sulfur is deactivated so as not to be involved in crosslinking. The reclaimed butyl-based rubber may also contain a halogenated butyl rubber partially, but the halogen is deactivated so as not to affect the present invention.

Examples of commercial products of the reclaimed butyl-based rubber include a reclaimed rubber from tubes produced by Muraoka Rubber Reclaiming Co., Ltd. and a reclaimed rubber from bladders produced by Car Quest Co., Ltd. The reclaimed rubber from tubes of Muraoka Rubber Reclaiming Co., Ltd. is prepared by heat treating butyl tubes under pressure. The reclaimed rubber from bladders of Car Quest Co., Ltd. is prepared by grinding bladders in an extruder. Each of these reclaimed butyl-based rubbers may be used alone, or two or more of them may be used in combination.

The halogenated butyl rubber (X-IIR) refers to a rubber wherein halogen is introduced into molecules of a regular butyl rubber. Herein, "halogenated butyl rubber" refers to a halogenated butyl rubber other than halogenated butyl rubber included in the reclaimed butyl-based rubber. Examples of the halogenated butyl rubber include brominated butyl rubbers (Br-IIR) and chlorinated butyl rubbers (Cl-IIR). Preferred among these are chlorinated butyl rubbers, because they are excellent in vulcanization rate and scorch resistance when used in combination with natural rubber (NR).

When the rubber component includes the IIR and/or X-IIR, the content of the IIR and/or X-IIR (total content when used in combination) based on 100% by mass of the rubber component is preferably 81% by mass or more, more preferably 83% by mass or more, and still more preferably 85% by mass or more. If the content of the IIR and/or X-IIR is less than 81% by mass, there is a tendency that sufficient air barrier property cannot be obtained. The content of the IIR and/or X-IIR is preferably 100% by mass because air barrier property is excellent, and is preferably 96% by mass or less and is more preferably 95% by mass or less because vulcanization adhesion to an adjacent component and tackiness during building are excellent.

When the rubber component includes the IIR and/or X-IIR, the content of non-halogenated butyl rubber, based on 100% by mass of the rubber component may be 0% by mass, but is preferably 5% by mass or more, and more preferably 8% by mass or more. Furthermore, the content of non-halogenated butyl rubber is preferably 30% by mass or less, and is more preferably 25% by mass or less. If the content of non-halogenated butyl rubber is more than 30% by mass, crosslinking homogeneity of the rubber component, satisfactory air barrier property and elongation at break tend not to be ensured.

When the rubber component includes the IIR and/or X-IIR, the content of reclaimed butyl-based rubber, based on 100% by mass of the rubber component is preferably 10% by mass or more as butyl rubber fraction because durability can be maintained and it is cost-effective. Furthermore, the content of reclaimed butyl-based rubber is preferably 25% by mass or less as butyl rubber fraction. If the content of reclaimed butyl-based rubber is more than 25% by mass as butyl rubber fraction, air barrier property tends to be deteriorated by the effect of oil contained together with the butyl rubber fraction. Preferably, reclaimed butyl-based rubber is not included in terms of air barrier property, fuel efficiency, and elongation at break.

When the rubber component includes the IIR and/or X-IIR, the content of the X-IIR, based on 100% by mass of the rubber component is preferably 51% by mass or more, and is more preferably 60% by mass or more. If the content of the X-IIR is less than 51% by mass, crosslinking homogeneity and crosslinking density of the rubber component, satisfactory air barrier property, and a sufficient vulcanization rate may not be ensured. The upper limit of the X-IIR content is not limited, and is preferably 100% by mass because air barrier property is excellent, and is preferably 96% by mass or less and is more preferably 90% by mass or less because tackiness during building and fuel efficiency are more excellent.

The isoprene-based rubber is not particularly limited and those generally used in the tire industry, such as SIR20, RSS#3, TSR20, natural rubber (NR) such as ultra pure natural rubber (UPNR) wherein impurities are removed, isoprene rubber (IR), and epoxidized natural rubber (ENR) may be used.

When the rubber component includes the isoprene-based rubber, the content of the isoprene-base rubber, based on 100% by mass of the rubber component is preferably 4% by mass or more, and is more preferably 5% by mass or more. If the content of the NR is less than 4% by mass, tackiness during building and vulcanization adhesion to an adjacent component tend to be deteriorated. Furthermore, the content of the isoprene-based rubber is preferably 19% by mass or less, more preferably 17% by mass or less, and still more preferably 15% by mass or less. If the content of the isoprene-based rubber is more than 19% by mass, air barrier property tends to be deteriorated.

The epoxidized natural rubber (ENR) can be suitably used for fuel-efficient tires because the ENR enables a rubber composition for an inner liner with a lower tan delta and more excellent rolling resistance properties compared to those of butyl rubber. The ENR may be formed by using a commercially available epoxidized natural rubber or epoxidizing a natural rubber. Methods for epoxidizing a natural rubber are not particularly limited and include, for example, a chlorohydrin process, a direct oxidation process, a hydrogen peroxide process, an alkyl hydroperoxide process, and a peroxidation process (JP 4-026617 B, JP 2-110182 A, GB 2113692 B, etc.). The peroxidation process includes, for example, a process to allow a natural rubber to react with an organic peracid, such as peracetic acid and performic acid. Epoxidized natural rubbers with various epoxidation rates can be prepared by adjusting the amount of the organic peracid and the reaction time. The epoxidation rate in the present invention refers to a ratio of the number of epoxidized double bonds to the total number of double bonds in a rubber before epoxidation (mol%).

The epoxidation rate of the ENR is preferably 10 mol% or more, more preferably 15 mol% or more, and still more preferably 20 mol% or more. If the epoxidation rate of the ENR is less than 10 mol%, air barrier property tends to be deteriorated. The epoxidation rate of the ENR is preferably 50 mol% or less, more preferably 45 mol% or less, and still more preferably 40 mol% or less. If the epoxidation rate is more than 50 mol%, gelation of a polymer component and deterioration in tan delta tend to occur.

When the rubber component includes the ENR as primary rubber component to make the rubber composition excellent in low heat build-up property, the content of the ENR, based on 100% by mass of the rubber component is preferably 90% by mass or more, more preferably 95% by mass or more, and still more preferably 96% by mass or more. If the content of the ENR is less than 90% by mass, air barrier property tends to be deteriorated. The content of the ENR is preferably 100% by mass because air barrier property and tan delta are excellent. Meanwhile, when used in combination with other rubber component(s) to further excellent low heat build-up property, the content of the ENR is preferably 95% by mass or less, and more preferably 90% by mass or less. The other rubber component(s) used in combination with the ENR are preferably the IIR and/or X-IIR because air barrier property, durability, and fuel efficiency are excellent.

The rubber composition according to the present invention may include a rubber component other than the butyl rubber, halogenated butyl rubber, and isoprene-based rubber (other rubber component). Examples of the other rubber component include styrene-isoprene-butadiene copolymer rubber (SIBR) and styrene-isobutylene-styrene block copolymer (SIBS). Each of these rubber components may be used alone, or two or more of them may be used in combination.

<Aliphatic Dibasic Acid Ester>

The rubber composition according to the present invention is characterized by comprising an aliphatic dibasic acid ester. Use of an aliphatic dibasic acid ester enables preparation of a rubber composition for an inner liner being excellent in air barrier property, brittle temperature, tackiness during building, and processability. The aliphatic dibasic acid ester is a compound wherein both carboxyl groups of the aliphatic dibasic acid are subjected to an esterification reaction with a compound having a hydroxy group such as alcohol, represented by the following formula (1):

$$R^1\text{-OOC-}(CH_2)_n\text{-COO-}R^1 \qquad (1)$$

In the formula (1), $R^1$ is a group formed in an esterification reaction of the compound having a hydroxy group such as alcohol, and preferably is an alkyl group or an ether group, more preferably has a carbon number of 5 or more, and still more preferably is an alkyl group with a carbon number of 5 or more or is a group represented by the following formula (2).

$$-CHR^2\text{-}CH_2\text{-O-}CH_2\text{-}CHR^2\text{-O}R^3 \qquad (2)$$

In the formula (2), $R^2$ represents a hydrogen atom or methyl group and $R^3$ represents a straight-chain or branched alkyl group with a carbon number of 1 to 6.

In the formula (1), n represents an integer of 1 or more, preferably an integer of 2 to 10, and more preferably an integer of 4 to 8.

Examples of an aliphatic dibasic acid ester wherein $R^1$ in the formula (1) is an alkyl group with a carbon number of 5 or more or a group represented by the formula (2), and n is an integer of 2 to 10, include bis(2-ethyl hexyl)adipate (DOA), diisononyl adipate (DINA), diisodecyl adipate (DIDA), bis(methyl diethylene glycol)adipate, bis(methyl dipropylene glycol)adipate, bis(ethyl diethylene glycol)adipate, bis(ethyl dipropylene glycol)adipate, bis {2-(2-butoxyethoxy)ethyl} adipate (BXA), bis(butyl dipropylene glycol)adipate, bis(2-ethyl hexyl)azelate (DOZ), and bis(2-ethyl hexyl)sebacate (DOS). Among these, DOS is preferred because air barrier property, resistance to embrittlement at low temperature, tackiness during building, and sheet processability can be further improved.

Examples of an aliphatic dibasic acid ester other than the above aliphatic dibasic acid esters wherein $R^1$ in the formula (1) is an alkyl group or ether group, and n is an integer of 1 or more include dibutyl adipate (DBA), diisobutyl adipate (DIBA), and dibutyl sebacate (DBS), and diethyl succinate (DESU).

The theoretical molecular weight (Mw) of the aliphatic dibasic acid ester is preferably 150 or more, more preferably 250 or more, and still more preferably 350 or more. When the Mw of the aliphatic dibasic acid ester is less than 150, the aliphatic dibasic acid ester moves to an adjacent component or volatilizes, thereby the effect of the aliphatic dibasic acid ester tends to be produced insufficiently and the flash point thereof tends to decrease. Furthermore, the Mw of the aliphatic dibasic acid ester is preferably 1000 or less, more preferably 750 or less, and still more preferably 500 or less. When the Mw of the aliphatic dibasic acid ester is more than 1000, the primary low-temperature plasticity tends not to be exerted sufficiently, and compatibility with a polymer tends to be insufficient.

The flash point of the aliphatic dibasic acid ester is preferably 100°C or more, more preferably 150°C or more, and still more preferably 200°C or more. When the flash point of the aliphatic dibasic acid ester is less than 100°C, volatility is high and weight loss occurs during rubber kneading and vulcanization and thus expected physical properties tend to become less obtainable. The upper limit of the flash point of the aliphatic dibasic acid ester is not particularly limited, and generally 250°C or less. Herein, the flash point of the aliphatic dibasic acid ester refers to a temperature related to Article 2 of the Fire Service Act and determined by rapid equilibrium closed cup method (JIS K 2265-2, ISO 3679). According to the classification of the Fire Service Act, a flash point of 200 to 250°C is Class 4 petroleum, and a flash point of 70 to 200°C is Class 3 petroleum.

The content of the aliphatic dibasic acid ester, per 100 parts by mass of the rubber component is 1 part by mass or more, preferably 2 parts by mass or more, and more preferably 4 parts by mass or more. When the content of the aliphatic dibasic acid ester is less than 1 part by mass, satisfactory air barrier property and resistance to embrittlement at low temperature tend not to be obtained. Furthermore, the content of the aliphatic dibasic acid ester is 30 parts by mass or less, preferably 25 parts by mass or less, and more preferably 20 parts by mass or less. When the content of the aliphatic dibasic acid ester is more than 30 parts by mass, the aliphatic dibasic acid ester bleeds excessively onto the surface of raw rubber before vulcanization, thereby tackiness during building tends to be lowered and reduction in the viscosity of the rubber component tends to lead to deterioration in filler dispersibility.

<Resin Components>

The rubber composition according to the present invention can be dispersed uniformly because the rubber composition is not dissolved in the early stage of kneading, but dissolved after mechanical dispersion by containing a resin with a softening point of 60°C or higher. The softening point of the resin is preferably 70°C or higher, and more preferably 80°C or higher. When the softening point is less than 60°C, the rubber composition is dissolved and the mechanical dispersion becomes insufficient, thereby air barrier property and tackiness during building tend to be lowered.

Furthermore, the softening point of the resin is preferably 135°C or lower, more preferably 130°C or lower, and still more preferably 125°C or lower. When the softening point of the resin is more than 135°C, the rubber composition is not sufficiently dissolved in the late stage of kneading, therebytackiness during building and air barrier property tends to be lowered. Herein, the softening point refers to a temperature wherein the resin begins to deform. In the present invention, the softening point refers to a value measured according to Method for Determination of Softening Point described in JIS K5902, using an automatic softening point tester according to the softening point tester described in JIS K2207 Test Method for Softening Point.

Examples of the resin include mixed resin, non-reactive alkylphenol resin, C5 petroleum resin, and coumarone-indene resin. Among these, a mixed resin is preferably contained as the resin with a softening point of 60°C or higher because air barrier property and tackiness during building are improved. A mixed resin and a non-reactive alkylphenol resin are preferably used in combination because of compatibility of air barrier property and resistance to embrittlement. Herein, the non-reactive alkylphenol resin, C5 petroleum resin, and coumarone-indene resin other than the mixed resin described as examples of the resin are resins compounded separately from resin components of the mixed resin.

The content of the resin with a softening point of 60°C or higher, per 100 parts by mass of the rubber component is 8 parts by mass or more, preferably 9 parts by mass or more, and more preferably 10 parts by mass or more. When the content of the resin is less than 8 parts by mass, air barrier property and tackiness during building tend to be deteriorated. Furthermore, the content of the resin is less than 30 parts by mass or less, preferably 25 parts by mass or less, and more preferably 20 parts by mass or less. When the content of the resin is more than 30 parts by mass, tackiness during building and resistance to embrittlement at low temperature tend to be lowered.

The mixed resin refers to a resin mixture wherein an aromatic-structured monomer and an aliphatic-structured monomer are polymerized. Air barrier property can be further improved by compounding the mixed resin. Mechanisms of the air barrier property include filling the gap between a reinforcement (e.g. carbon black) and a polymer, promoting the mixture among different kinds of rubber components, and turning the mixed resin into a thin film to produce an air barrier effect. Examples of resins used in the mixed resin include aromatic hydrocarbon-based resin such as phenolic adhesive resin, coumarone resin, indene resins, and coumarone-indene resin, and aliphatic hydrocarbon-based resins such as $C_5$, $C_8$, and $C_9$. Mixtures of two or more kinds selected from these may be used. Among these, a combination of an aromatic hydrocarbon-based resin and an aliphatic hydrocarbon-based resin is preferred, and a combination of a polymeric aromatic hydrocarbon resin and an aliphatic hydrocarbon resin is more preferred.

Specific examples of the mixed resin include Struktol 40MS produced by Struktol Company, Rhenosin 145A produced by Rhein Chemie Corporation, and Promix 400 produced by Flow Polymers Inc.

When the rubber composition contains the mixed resin, the content of the mixed resin, per 100 parts by mass of the rubber component is preferably 5 parts by mass or more, more preferably 6 parts by mass or more, and still more preferably 7 parts by mass or more. When the content of the mixed resin is less than 5 parts by mass, the mechanisms of the air barrier property does not function sufficiently, and air barrier property tends to be lowered and elongation at break tends to be deteriorated. Furthermore, the content of the mixed resin is preferably 20 parts by mass or lower, more preferably 18 parts by mass or less, and still more preferably 16 parts by mass or less. When the content of the mixed resin is more than 20 parts by mass, the brittle temperature tends to be over -34°C.

The non-reactive alkylphenol resin refers to a resin wherein alkyl chain is at ortho position and at para position (especially at para position) of hydroxyl group of benzene ring in the chain, and wherein contribution to cross-linking reaction is small in vulcanized stage. The non-reactive alkylphenol resin is a resin compounded separately from the mixed resin including an aromatic hydrocarbon-based resin as described above. Specific examples of the non-reactive alkylphenol resin include TH110 produced by Struktol Company and SP1068 resin produced by Schenectady Company. Each of these resins may be used alone, or two or more of them may be used in combination.

When the rubber composition contains the non-reactive alkylphenol resin, the content of the non-reactive alkylphenol resin, per 100 parts by mass of the rubber component is preferably 0.2 parts by mass or more, more preferably 0.5 parts by mass or more, and still more preferably 1.0 part by mass or more. Furthermore, the content of the non-reactive alkylphenol resin is preferably less than 20 parts by mass, and more preferably 10 parts by mass or less. When the content of the non-reactive alkylphenol resin is within the above range, low temperature E*, fuel efficiency, and tackiness are tend to perform at a high level.

The C5 petroleum resin is a resin compounded separately from the mixed resin including the aliphatic hydrocarbon-based resin as described above. A specific example of the C5 petroleum resin includes Malkalez T-100AS produced by Maruzen Petrochemical Co., Ltd. The coumarone-indene resin is a resin containing coumarone and inden, and compounded separately from the mixed resin including the aromatic hydrocarbon-based resin as described above. Specific examples of the coumarone-indene resin include Nitto Resin COUMARON G-90 (softening point: 90°C) produced by Nitto Chemical Co., Ltd. and NOVARES C10 (softening point: 10°C) produced by Rutgers Chemicals. Generally, these resin components tend to have inferior tackiness to that of the non-reactive alkylphenol, but have excellent fuel efficiency.

When the rubber composition contains the C5 petroleum resin and/or the coumarone-indene resin, the content of the C5 petroleum resin and/or the coumarone-indene resin (total content when used in combination), per 100 parts by mass of the rubber component is preferably 0.2 to 20 parts by mass, and more preferably 1.0 to 10 parts by mass because the balance among low temperature E*, fuel efficiency, and tackiness is excellent.

<Other Compounding Ingredients>

For the rubber composition according to the present invention, compounding ingredients generally used in the production of rubber compositions other than the components, such as carbon black, silica, other fillers, zinc oxide, stearic acid, oil, antioxidant, wax, vulcanizing agent, and vulcanization accelerator may be optionally compounded.

The carbon black is not particularly limited, and SAF, ISAF, HAF, FF, FEF, and GPF generally used in the tire industry are used. Specific examples of the carbon black include StatexN762 ($N_2SA$: 29 $m^2/g$) produced by Columbia Carbon Company, StatexN660 ($N_2SA$: 35 $m^2/g$) produced by Jiangxi Black Cat Carbon Black Inc., Ltd., and Show Black N660 ($N_2SA$: 35 $m^2/g$) produced by Cabot Japan K.K. Each of these carbon blacks may be used alone or two or more of them may be used in combination, or they may be used in combination with silica and/or other fillers below.

The nitrogen adsorption specific surface area ($N_2SA$) of the carbon black is preferably 20 $m^2/g$ or more, and more preferably 25 $m^2/g$ or more. When the $N_2SA$ of the carbon black is less than 20 $m^2/g$, a sufficient reinforcing property may not be obtained. Furthermore, the $N_2SA$ of the carbon black is preferably 40 $m^2/g$ or less. When the $N_2SA$ of the carbon black is more than 40 $m^2/g$, voids around and inside the carbon black is generated, and thus air barrier property tends to be deteriorated, low temperature E* may be increased, and resistance to crack development and elongation at break tend to be lowered. The $N_2SA$ of the carbon black refers to a value measured by the BET method in accordance with ASTMD3037-81.

When the rubber composition contains the carbon black, the content of the carbon black, per 100 parts by mass of the rubber component is preferably 20 parts by mass or more, and more preferably 25 parts by mass or more. If the content of the carbon black is less than 20 parts by mass, generation of kneading torque is insufficient and filler dispersibility is lowered, thereby elongation at break and resistance to crack development of the rubber composition tend to be deteriorated. Furthermore, the content of the carbon black is preferably 80 parts by mass or less, and more preferably 75 parts by mass or less. If the content of the carbon black is more than 80 parts by mass, dispersing a filler is difficult, thereby elongation at break, resistance to crack development, and fuel efficiency tend to be deteriorated.

The silica is not particularly limited, and those generally used in the tire industry may be used. Specific examples of the silica include Z1085 ($N_2SA$: 85$m^2/g$) produced by Rhodia, Z115 ($N_2SA$: 115 $m^2/g$) produced by Rhodia, and Ultrasil U360 ($N_2SA$: 50 $m^2/g$) produced by Evonik Industries. Each of these silica may be used alone, or two or more of them may be used in combination. Since generally silica is difficult to form a structure and has few voids, silica having the $N_2SA$ of 85 $m^2/g$ (Z1085) has the same air barrier property as those of carbon black having the $N_2SA$ of 35 $m^2/g$ (N660).

The nitrogen adsorption specific surface area ($N_2SA$) of the silica is preferably 20 $m^2/g$ or more, and more preferably 30 $m^2/g$ or more. If the $N_2SA$ of the silica is less than 20 $m^2/g$, a sufficient reinforcing property may not be achieved. Furthermore, the $N_2SA$ of the silica is preferably 120 $m^2/g$ or less. If the $N_2SA$ of the silica is more than 120 $m^2/g$, air barrier property and tan delta may be deteriorated. The $N_2SA$ of the silica refers to a value measured by the BET method in accordance with ASTMD3037-81.

Examples of the other fillers include semi-reinforcing fillers such as finely ground bituminous coal, talc, calcium carbonate, and hard clay. Use of these semi-reinforcing fillers prevents formation of polymer gels during kneading, which allows for good sheet processability. Among these, finely ground bituminous coal (e.g. Austin Black 325 produced by Coal Fillers Inc.) is preferred in terms of sheet processability and cost, and talc (e.g. HAR produced by Nihon Mistron Co., Ltd.) is preferred in terms of air barrier property.

The average particle size of the semi-reinforcing fillers is preferably 100 $\mu$m or less, more preferably 50 $\mu$m or less, and still more preferably 5 $\mu$m or less. If the average particle size of the semi-reinforcing filler is more than 100 $\mu$m, durability, tackiness during building, and air barrier property tends to be lowered. The lower limit of the average particle size of the semi-reinforcing fillers is not particularly limited and is preferably 1$\mu$m or more. The average particle sizes of the semi-reinforcing fillers each refer to an average particle size on a mass basis as determined from a particle size distribution measured in accordance with JIS Z 8815-1994.

The content of the silica and/or other filler(s), namely the content of filler(s) other than carbon black, per 100 parts by mass of the rubber component (total content when used in combination) may be 0 parts by mass, preferably 5 parts by mass or more, and more preferably 7 parts by mass or more. Furthermore, the content of the silica and/or other filler(s) is preferably 85 parts by mass or less, more preferably 79 parts by mass or less, and still more preferably 50 parts by mass or less. If the content of the silica and/or other filler(s) is more than 85 parts by mass, especially when silica is used, non-uniform shrinkage of sheet tends to occur after extrusion; when a semi-reinforcing filler is used, agglomerates are likely to be generated, which causes lowering of kneading torque and tends to lower filler dispersibility.

An example of the oil includes a process oil compounded separately from oil components contained in a reclaimed butyl-based rubber, sulfur, finely ground bituminous coal, etc. As the process oil, those generally used in the tire industry may be suitably used. Generally, the process oil comprises paraffin component, naphthene component, and aromatic component. Specific examples of the process oil include Diana Process PA32, AC-12, AC-460, AH-24, and AH-58 produced by Idemitsu Kosan Co., Ltd. as well as Vivatec400 (TDAE (Treated Distillate Aromatic Extracts) oil) produced by H&R. Each of these process oils may be used alone or two or more of them may be used in combination.

The process oil preferably has a low aromatic component content. A high aromatic component content causes poor compatibility with butyl rubber and bleeding of the oil onto the surface of the rubber sheet, and thus tackiness during building tends to be lowered. In this case, the content of the aromatic component is preferably 17% or less, more preferably 14% or less, and still more preferably 11% or less.

The content of the process oil, per 100 parts by mass of the rubber component is preferably 0 part by mass because of excellent air barrier property, and is preferably 1 part by mass or more because tackiness during building and vulcanization adhesion to an adjacent component are excellent. Furthermore, the content of the process oil is preferably 7 parts by mass or less, and more preferably 3 parts by mass or less. If the content of the process oil is more than 7 parts by mass, there is a tendency that the incorporation of polymer phases becomes rough and air barrier property is deteriorated.

The antioxidant is not particularly limited, and those used in the tire industry may be used. Examples thereof include quinoline, quinone, phenol, and phenylenediamine antioxidants. Preferred among these are quinoline antioxidants, because they effectively suppress oxidation degradation and are less likely to cause rubber scorch. Examples of the quinoline antioxidants include 2,2,4-trimethyl-1,2-dihydroquinoline polymers (RD) and 6-ethoxy-2,2,4-trimethyl-1,2-dihydroquinoline, and preferred are 2,2,4-trimethyl-1,2-dihydroquinoline polymers.

When the rubber composition contains the antioxidant, the content of the antioxidant, per 100 parts by mass of the rubber component, is preferably 0.5 parts by mass or more, and more preferably 0.8 parts by mass or more. If the content of the antioxidant is less than 0.5 parts by mass, the antioxidant tends not to sufficiently suppress oxidation degradation of the inner liner and adjacent components. The content of the antioxidant is preferably 2.0 parts by mass or less, more preferably 1.5 parts by mass or less, and still more preferably 1.2 parts by mass or less. If the content of the antioxidant is more than 2.0 parts by mass, slip of the rotor is likely to occur, and filler dispersibility, elongation at break, and kneading efficiency tend to be deteriorated.

<Rubber Composition and Tire>

The rubber composition of the present invention can be prepared by a commonly used method. For example, the above components other than zinc oxide, crosslinking agent(s), and vulcanization accelerator are kneaded (base kneading) with a known kneading machine generally used in the rubber industry, such as a Banbury mixer, a kneader, or an open roll mill, and then zinc oxide, crosslinking agent(s), and vulcanization accelerator are added and further kneaded (final kneading), and subsequently the resulting mixture is vulcanized, whereby the rubber composition can be prepared.

The rubber composition (vulcanized rubber composition) of the present invention has a brittle temperature of -35°C or lower, preferably -37°C or lower, and more preferably -39°C or lower. If the brittle temperature is more than -35°C, resistance to embrittlement at low temperature tends to be insufficient. The lower limit of the brittle temperature is not particularly limited, and is typically -55°C or higher. The brittle temperature is measured according to the method described in the EXAMPLES below.

The tire of the present invention can be produced by a commonly used method using the above rubber composition. Specifically, the rubber composition is extruded and processed into the shape of an inner liner, arranged in a usual manner in a tire building machine, and assembled with other tire components to form an unvulcanized tire. The resultant unvulcanized tire is then heat-pressurized in a vulcanizer to produce the tire of the present invention.

The tire of the present invention can be used for passenger vehicles, commercial vehicles, motorcycles, heavy load vehicles, agricultural vehicles, industrial vehicles and the like, and is particularly suitable for passenger vehicles.

EXAMPLES

Hereinafter, the present invention will be described in more detail based on examples. The examples are not intended to limit the scope of the present invention.

A variety of chemicals used in examples and comparative examples will be described.

Natural rubber (NR): TSR20 produced in Malaysia Epoxidized natural rubber (ENR): ENR obtained in "Production of ENR" to be described below (epoxidation rate: 25.1 mol%).

Isoprene rubber (IR): IR2200 produced by Zeon Corporation Halogenated butyl rubber 1: Chlorinated butyl rubber HT1066 produced by ExxonMobil Chemical Company

Halogenated butyl rubber 2: Brominated butyl rubber 2255 produced by ExxonMobil Chemical Company

Reclaimed butyl-based rubber: Reclaimed butyl-based rubber (butyl rubber: 50% by mass, carbon black N660: 33% by mass, other components: 17% by mass) produced by Car Quest Co., Ltd.

Butyl rubber: Regular butyl rubber 268 produced by ExxonMobil Chemical Company

Carbon black 1: Statex N762 ($N_2SA$: 29 $m^2/g$) produced by Columbian Carbon Company

Carbon black 2: ShoBlack N660 ($N_2SA$: 35 $m^2/g$) produced by Cabot Japan K. K.

Silica: Z1085 ($N_2SA$: 85 $m^2/g$) produced by Rhodia

Finely ground bituminous coal: Austin Black 325 (average particle size: 5 $\mu$m, specific gravity: 1.3, $N_2SA$ by the BET method: 9.0 $m^2/g$, oil content: 17% by mass) produced by Coal Fillers Inc.

Flat talc: HAR (average particle size: 5.7 $\mu$m, specific gravity: 2.7, BET specific surface area: 22 $m^2/g$) produced by Nihon Mistron Co., Ltd.

Calcium carbonate: Tancaru 200 (average particle size: 2.7 $\mu$m, specific gravity: 2.68, BET specific surface area: 1.5 $m^2/g$) produced by Takehara Kagaku Kogyo Co., Ltd.

Hard clay: Crown Clay (average particle size: 0.6 $\mu$m) produced by Southeastern Clay Company

Mixed resin: 40MS (a combination of an aromatic hydrocarbon-based resin and an aliphatic hydrocarbon-based resin, softening point: 98 to 106°C) produced by Struktol Company

C5 petroleum resin: Malkalez T-100AS (softening point: 97 to 103°C) produced by Maruzen Petrochemical Co., Ltd.

Alkylphenol resin: SP1068 resin (softening point: 87°C, weight-average molecular weight (Mw): 2225, number average molecular weight (Mn): 1053) produced by Schenectady Company

Process oil 1: Diana Process Oil PA32 (paraffin component: 67% by mass, naphthene component: 28% by mass, aroma component: 5% by mass) produced by Idemitsu Kosan Co., Ltd.

Process oil 2: Vivatec 400 (TDAE oil; paraffin component: 49% by mass, naphthene component: 27% by mass, aroma component: 23% by mass) produced by H & R Company.

Plasticizer 1: DOS (bis(2-ethyl hexyl)sebacate, freezing point: -62°C, Mw: 427, flash point: 222°C, $R^1$: 2-ethyl hexyl, n: 8) produced by DAIHACHI CHEMICAL INDUSTRY CO., LTD.

Plasticizer 2: DOZ (bis(2-ethyl hexyl) azelate, freezing point: -60°C, Mw: 413, flash point: 211 °C, $R^1$: 2-ethyl hexyl, n: 7) produced by DAIHACHI CHEMICAL INDUSTRY CO., LTD.

Plasticizer 3: BXA-N (bis(2-(2-butoxyethoxy)ethyl)adipate, freezing point: -19°C, Mw: 435, flash point: 207°C, $R^1$: 2-(2-butoxyethoxy)ethyl, n: 4) produced by DAIHACHI CHEMICAL INDUSTRY CO., LTD.

Plasticizer 4: DOA (bis(2-ethyl hexyl)adipate, freezing point: -70°C, Mw: 371, flash point: 205°C, $R^1$: 2-ethyl hexyl, n: 4) produced by DAIHACHI CHEMICAL INDUSTRY CO., LTD.

Plasticizer 5: DBA (dibutyl adipate, freezing point: -22°C, Mw: 258, flash point: 161°C, $R^1$: butyl group, n: 4) produced by DAIHACHI CHEMICAL INDUSTRY CO., LTD.

Plasticizer 6: DESU (diethyl succinate, freezing point: -62°C, Mw: 174, flash point: 105°C, $R^1$: ethyl group, n: 2) produced by DAIHACHI CHEMICAL INDUSTRY CO., LTD.

Plasticizer 7: DOP (bis(2-ethyl hexyl)phthalate, freezing point: -51°C, Mw: 391, flash point: 218°C) produced by DAIHACHI CHEMICAL INDUSTRY CO., LTD.

Plasticizer 8: TOP (tris(2-ethyl hexyl)phosphate, freezing point: -72°C, Mw: 435, flash point: 204°C) produced by DAIHACHI CHEMICAL INDUSTRY CO., LTD.

Zinc oxide: zinc oxide #2 produced by Mitsui Mining & Smelting Co., Ltd.

Stearic acid: stearic acid "Tsubaki" produced by NOF Corporation Antioxidant 1: Antigene 6C (6PPD, N-(1,3-dimethylbutyl)-N'-phenyl-p-phenylenediamine) produced by Sumitomo Chemical Co., Ltd.

Antioxidant 2: Nocrack 224 (2,2,4-trimethyl-1,2-dihydroquinolin(e) polymer) produced by Ouchi Shinko Chemical Industrial Co., Ltd. Sulfur: HK-200-5 (oil content: 5% by mass) produced by Hosoi Chemical Industry Co., Ltd.

Vulcanization accelerator: Nocceler DM (di-2-benzothiazolyl disulfide) produced by Ouchi Shinko Chemical Industrial Co., Ltd.

Production of ENR

A 1500 g of high ammonia type, natural rubber latex (solid content 60%) was put in a 5-liter container comprising a stirring rod, a dropping funnel, and a condenser, diluted by adding 1.5 liters of distilled water so that the solid content becomes 30%, and then adjusted to 20°C. A 9 g of nonionic emulsifier was added to this while being agitated. Next, a 800 g of peracetic acid with the concentration of 12.5 mol/L was slowly added while being adjusted with 2.8% ammonia water so that the pH of the latex transitions in the range of 5 to 6. After added, the resultant mixture was reacted for five hours at room temperature, and then formic acid or methanol was added little by little to coagulate a rubber component only. After that, it was cleansed with distilled water for several times and dried to prepare an ENR. The epoxidation rate of the resultant ENR was 25.1 mol%.

Measurement of Epoxidation Rate

The resultant ENR was dissolved in deuterated chloroform, the ratio of the number of diene units not epoxidized to the number of diene units epoxidized was determined by a nuclear magnetic resonance (NMR (JNM-ECA series produced by JEOL Ltd.)) spectroscopic analysis and the epoxidation rate was calculated by the following equation.

$$\text{(Epoxidation rate E\%)} = \text{(number of epoxies contained in rubber main chain)}/\text{(number of diene units contained in rubber main chain (including epoxidized units))} \times 100$$

Examples and Comparative Examples

According to each formulation shown in Table 1 to 3, all of the chemicals except the zinc oxide, sulfur, and vulcanization accelerator, were kneaded for 5 minutes until the discharging temperature reaches 170°C with a 1.7 L-Banbury mixer to obtain the kneaded mixture. Subsequently, the zinc oxide, sulfur, and vulcanization accelerator were added to the kneaded mixture, and the resulting mixture was kneaded with a biaxial open roll for 4 minutes until it reaches 105°C to prepare an unvulcanized rubber composition. The resultant unvulcanized rubber composition was extruded into a predetermined shape and was press vulcanized at 170°C for 12 minutes. Since the inner liner is filmy and is difficult to sample, a rubber specimen was prepared according to each test purpose below and was evaluated.

<Measurement of Brittle Temperature>

The brittle temperature of each rubber composition was measured in accordance with the low-temperature impact brittleness test method described in JIS K 6301. The lower the brittle temperature is, the better the crack resistance at low temperature is.

<Test of Tackiness During Building>

The above unvulcanized rubber compositions were extruded into a sheet with the thickness of 1 mm using a roll. The obtained rubber sheets were evaluated with a tack tester (Tack Tester II produced by Toyo Seiki Seisaku-sho, Ltd.), then tackiness between a metal plate sensor and a rubber sheet. The results of tackiness during building of the unvulcanized rubber compositions are expressed in indices wherein the index of tackiness during building of Comparative Example 1 is 100. The higher the index, the better the tackiness during building. In the present invention, the performance target of tackiness during building (index) is 90 or more.
When sheets of a rubber composition for an inner liner are rolled around a tire building drum before vulcanization, the sheets are generally overlapped by a few millimeters in width and pressed with a roll to prevent joint portions of the sheets from opening during vulcanization. In building on the tire building drum, the rubber composition for an inner liner contacts with adjacent components, namely a rubber composition for a tie gum and a case top. Therefore, such tackiness during building of the rubber composition for an inner liner is important in terms of ensuring vulcanization adhesion at the above joint portions and ensuring vulcanization adhesion to adjacent components. However, excessive tackiness during building is not preferred because it causes excessive contact with a jig of the building machine, "wrinkles" at the time of assembling, and "bare" (underbaked, poor appearance in an air accumulation part) after vulcanization.

<Test of Air Barrier property>

The air permeability of the vulcanized rubber compositions were measured in accordance with ASTM D-1434-75M, and expressed in indices using the following equation. The higher the index of air barrier property, the lower the air permeability of the vulcanized rubber composition, and, in turn, the better the air barrier property. In the present invention, the performance target of air barrier property (index) is 110 or more.

$$\text{(Index of air barrier property)} = \text{(air permeability of Comparative Example 1)}/\text{(air permeability of each rubber composition)} \times 100$$

TABLE 1

| | Example | | | Com. Ex. | | | | | | Example | | | |
|---|---|---|---|---|---|---|---|---|---|---|---|---|---|
| | 1 | 2 | 3 | 1 | 2 | 3 | 4 | 5 | 6 | 4 | 5 | 6 | 7 |
| Compounded amount (part by mass) | | | | | | | | | | | | | |
| NR | - | - | - | - | - | - | 15 | - | - | 15 | 10 | - | - |
| ENR | - | - | - | - | - | - | - | 100 | 15 | - | - | 100 | 15 |
| IR | - | - | - | - | - | - | - | - | - | - | - | - | - |
| Halogenated butyl rubber 1 | - | - | - | - | - | - | 85 | - | 85 | 85 | 90 | - | 85 |
| Halogenated butyl rubber 2 | 100 | 90 | 80 | 100 | 100 | 90 | - | - | - | - | - | - | - |
| Reclaimed butyl-based rubber | - | 20 | - | - | - | 20 | - | - | - | - | - | - | - |
| Butyl rubber | - | - | - | - | - | - | - | - | - | - | - | - | - |
| Carbon black 1 | - | - | - | - | - | - | - | - | - | - | - | - | - |
| Carbon black 2 | 60 | 58 | 60 | 60 | 60 | 58 | 56 | 50 | 56 | 56 | 58 | 50 | 56 |
| Silica | - | - | - | - | - | - | - | - | - | - | - | - | - |
| Finely ground bituminous coal | - | 20 | - | - | - | 20 | - | - | - | - | 18 | - | - |
| Flat talc | - | - | - | - | - | - | 20 | 40 | 20 | 20 | - | 40 | 20 |
| Calcium carbonate | - | - | - | - | - | - | - | - | - | - | - | - | - |
| Hard clay | - | - | - | - | - | - | - | - | - | - | - | - | - |
| Mixed resin | 10 | 15 | 15 | - | 10 | 5 | 10 | 10 | 10 | 10 | 10 | 10 | 10 |
| C5 petroleum resin | - | - | - | - | - | - | - | - | - | - | - | - | - |
| Alkyl phenol resin | 2.5 | 2.5 | 2.5 | 2.5 | 2.5 | 2.5 | 2.0 | 2.0 | 2.0 | 2.0 | 3.0 | 2.5 | 2.5 |
| Process oil 1 | 2 | - | 2 | 7 | 4 | 3 | 2 | - | 2 | 2 | 2 | - | 2 |
| Process oil 2 | - | - | - | - | - | - | - | - | - | - | - | - | - |
| Plasticizer 1 (DOS) | 5 | 10 | 10 | - | - | - | - | - | - | 5 | 5 | 10 | - |
| Plasticizer 2 (DOZ) | - | - | - | - | - | - | - | - | - | - | - | - | - |
| Plasticizer 3 (BXA-N) | - | - | - | - | - | - | - | - | - | - | - | - | - |
| Plasticizer 4 (DOA) | - | - | - | - | - | - | - | - | - | - | - | - | - |

(continued)

| | Example | | | Com. Ex. | | | | | | Example | | | |
|---|---|---|---|---|---|---|---|---|---|---|---|---|---|
| | 1 | 2 | 3 | 1 | 2 | 3 | 4 | 5 | 6 | 4 | 5 | 6 | 7 |
| Compounded amount (part by mass) | | | | | | | | | | | | | |
| Plasticizer 5 (DBA) | - | - | - | - | - | - | - | - | - | - | - | - | - |
| Plasticizer 6 (DESU) | - | - | - | - | - | - | - | - | - | - | - | - | - |
| Plasticizer 7 (DOP) | - | - | - | - | - | - | - | - | - | - | - | - | - |
| Plasticizer 8 (TOP) | - | - | - | - | - | - | - | - | - | - | - | - | - |
| Zinc oxide | 1.5 | 1.5 | 1.5 | 1.5 | 1.5 | 1.5 | 1.5 | 2.9 | 1.5 | 1.5 | 1.5 | 2.9 | 1.5 |
| Stearic acid | 1.5 | 1.5 | 1.5 | 1.5 | 1.5 | 1.5 | 1.5 | 1.5 | 1.5 | 1.5 | 1.5 | 1.5 | 1.5 |
| Antioxidant 1 | - | - | - | - | - | - | - | 1 | - | - | - | 1 | - |
| Antioxidant 2 | 1 | 1 | 1 | 1 | 1 | 1 | 1 | 1 | 1 | 1 | 1 | 1 | 1 |
| Sulfur (5% oil-containing) | 0.5 | 0.5 | 0.5 | 0.5 | 0.5 | 0.5 | 0.5 | 1.5 | 0.5 | 0.5 | 0.5 | 1.5 | 0.5 |
| Vulcanization accelerator | 1.25 | 1.25 | 1.25 | 1.25 | 1.25 | 1.25 | 1.25 | 1.25 | 1.25 | 1.25 | 1.25 | 1.25 | 1.25 |
| Evaluation result | | | | | | | | | | | | | |
| Brittle temperature (°C) | -41 | -44 | -46 | -40 | -30 | -37 | -33 | -27 | -27 | -39 | -36 | -41 | -35 |
| Index of tackiness during building | 103 | 103 | 100 | 100 | 99 | 100 | 105 | 98 | 89 | 108 | 105 | 111 | 106 |
| Index of air barrier property | 150 | 152 | 165 | 100 | 125 | 108 | 104 | 96 | 106 | 110 | 111 | 110 | 118 |

EP 2 957 592 B1

TABLE 2

| | Example | | | | | | Com. Ex. | |
|---|---|---|---|---|---|---|---|---|
| | 1 | 8 | 9 | 10 | 11 | 12 | 7 | 8 |
| Compounded amount (part by mass) | | | | | | | | |
| NR | - | - | - | - | - | - | - | - |
| ENR | - | - | - | - | - | - | - | - |
| IR | - | - | - | - | - | - | - | - |
| Halogenated butyl rubber 1 | - | - | - | - | - | - | - | - |
| Halogenated butyl rubber 2 | 100 | 100 | 100 | 100 | 100 | 100 | 100 | 100 |
| Reclaimed butyl-based rubber | - | - | - | - | - | - | - | - |
| Butyl rubber | - | - | - | - | - | - | - | - |
| Carbon black 1 | - | - | - | - | - | - | - | - |
| Carbon black 2 | 60 | 60 | 60 | 60 | 60 | 60 | 60 | 60 |
| Silica | - | - | - | - | - | - | - | - |
| Finely ground bituminous coal | - | - | - | - | - | - | - | - |
| Flat talc | - | - | - | - | - | - | - | - |
| Calcium carbonate | - | - | - | - | - | - | - | - |
| Hard clay | - | - | - | - | - | - | - | - |
| Mixed resin | 10 | 10 | 10 | 10 | 10 | 10 | 10 | 10 |
| C5 petroleum resin | - | - | - | - | - | - | - | - |
| Alkyl phenol resin | 2.5 | 2.5 | 2.5 | 2.5 | 2.5 | 2.5 | 2.5 | 2.5 |
| Process oil 1 | 2 | 2 | 2 | 2 | 2 | 2 | 2 | 2 |
| Process oil 2 | - | - | - | | | | | |
| Plasticizer 1 (DOS) | 5 | - | - | - | - | - | - | - |
| Plasticizer 2 (DOZ) | - | 5 | - | - | - | - | - | - |
| Plasticizer 3 (BXA-N) | - | - | 5 | - | - | - | - | - |
| Plasticizer 4 (DOA) | - | - | - | 5 | - | - | - | - |
| Plasticizer 5 (DBA) | - | - | - | - | 5 | - | - | - |
| Plasticizer 6 (DESU) | - | - | - | - | - | 5 | - | - |
| Plasticizer 7 (DOP) | - | - | - | - | - | - | 5 | - |
| Plasticizer 8 (TOP) | - | - | - | - | - | - | - | 5 |
| Zinc oxide | 1.5 | 1.5 | 1.5 | 1.5 | 1.5 | 1.5 | 1.5 | 1.5 |
| Stearic acid | 1.5 | 1.5 | 1.5 | 1.5 | 1.5 | 1.5 | 1.5 | 1.5 |
| Antioxidant 1 | - | - | - | - | - | - | - | - |
| Antioxidant 2 | 1 | 1 | 1 | 1 | 1 | 1 | 1 | 1 |
| Sulfur (5% oil-containing) | 0.5 | 0.5 | 0.5 | 0.5 | 0.5 | 0.5 | 0.5 | 0.5 |
| Vulcanization accelerator | 1.25 | 1.25 | 1.25 | 1.25 | 1.25 | 1.25 | 1.25 | 1.25 |
| Evaluation result | | | | | | | | |
| Brittle temperature (°C) | -41 | -42 | -39 | -44 | -35 | -36 | -34 | -40 |
| Index of tackiness during building | 103 | 103 | 107 | 101 | 96 | 94 | 93 | 102 |
| Index of air barrier property | 150 | 148 | 148 | 149 | 145 | 139 | 132 | 148 |

TABLE 3

| | Example | | | Com. Ex. | | | | Example | | | | | |
|---|---|---|---|---|---|---|---|---|---|---|---|---|---|
| | 13 | 14 | 15 | 9 | 10 | 11 | 16 | 17 | 18 | 19 | 20 | 21 | 22 |
| Compounded amount (part by mass) | | | | | | | | | | | | | |
| NR | - | - | - | - | - | - | - | - | - | - | - | - | - |
| ENR | - | - | - | - | - | - | - | - | - | - | - | - | - |
| IR | - | - | - | - | - | - | - | - | - | - | - | - | - |
| Halogenated butyl rubber 1 | - | - | - | - | - | - | - | - | - | - | - | - | - |
| Halogenated butyl rubber 2 | 80 | 80 | 100 | 100 | 100 | 80 | 100 | 100 | 100 | 100 | 100 | 100 | 100 |
| Reclaimed butyl-based rubber | - | - | - | - | - | - | - | - | - | - | - | - | - |
| Butyl rubber | 20 | 20 | - | - | - | 20 | - | - | - | - | - | - | - |
| Carbon black 1 | - | - | - | - | - | - | - | - | - | 70 | - | - | - |
| Carbon black 2 | 55 | 53 | 60 | 60 | 55 | 53 | 60 | 60 | 60 | - | 55 | 58 | 54 |
| Silica | - | - | - | - | - | - | - | - | - | - | 10 | - | - |
| Finely ground bituminous coal | - | - | - | - | - | - | - | - | - | - | - | - | - |
| Flat talc | - | - | - | - | - | - | - | - | - | - | - | - | - |
| Calcium carbonate | - | - | - | - | - | - | - | - | - | - | - | 20 | - |
| Hard clay | - | - | - | - | - | - | - | - | - | - | - | - | 20 |
| Mixed resin | 20 | 20 | 10 | 10 | 10 | 30 | 10 | 10 | 10 | 10 | 10 | 10 | 10 |
| C5 petroleum resin | - | 5.0 | - | - | - | - | - | - | 2.5 | - | - | - | - |
| Alkyl phenol resin | 2.5 | - | 2.5 | 2.5 | 2.5 | 2.5 | - | 2.5 | - | 2.5 | 2.5 | 2.5 | 2.5 |
| Process oil 1 | 2 | 2 | 3 | 4 | 2 | 2 | 7 | - | 2 | 2 | 2 | 2 | 2 |
| Process oil 2 | - | - | - | - | - | - | - | 2 | - | - | - | - | - |
| Plasticizer 1 (DOS) | 20 | 25 | 2 | 0.5 | 35 | 25 | 5 | 5 | 5 | 5 | 5 | 5 | 5 |
| Plasticizer 2 (DOZ) | - | - | - | - | - | - | - | - | - | - | - | - | - |
| Plasticizer 3 (BXA-N) | - | - | - | - | - | - | - | - | - | - | - | - | - |
| Plasticizer 4 (DOA) | - | - | - | - | - | - | - | - | - | - | - | - | - |
| Plasticizer 5 (DBA) | - | - | - | - | - | - | - | - | - | - | - | - | - |
| Plasticizer 6 (DESU) | - | - | - | - | - | - | - | - | - | - | - | - | - |
| Plasticizer 7 (DOP) | - | - | - | - | - | - | - | - | - | - | - | - | - |
| Plasticizer 8 (TOP) | - | - | - | - | - | - | - | - | - | - | - | - | - |
| Zinc oxide | 1.5 | 1.5 | 1.5 | 1.5 | 1.5 | 1.5 | 1.5 | 1.5 | 1.5 | 1.5 | 1.5 | 1.5 | 1.5 |
| Stearic acid | 1.5 | 1.5 | 1.5 | 1.5 | 1.5 | 1.5 | 1.5 | 1.5 | 1.5 | 1.5 | 1.5 | 1.5 | 1.5 |

(continued)

| | Example | | | Com. Ex. | | | | | Example | | | | |
|---|---|---|---|---|---|---|---|---|---|---|---|---|---|
| | 13 | 14 | 15 | 9 | 10 | 11 | 16 | 17 | 18 | 19 | 20 | 21 | 22 |
| Compounded amount (part by mass) | | | | | | | | | | | | | |
| Antioxidant 1 | - | - | - | - | - | - | - | - | - | - | - | - | - |
| Antioxidant 2 | 1 | 1 | 1 | 1 | 1 | 1 | 1 | 1 | 1 | 1 | 1 | 1 | 1 |
| Sulfur (5% oil-containing) | 0.5 | 0.5 | 0.5 | 0.5 | 0.5 | 0.5 | 0.5 | 0.5 | 0.5 | 0.5 | 0.5 | 0.5 | 0.5 |
| Vulcanization accelerator | 1.25 | 1.25 | 1.25 | 1.25 | 1.25 | 1.25 | 1.25 | 1.25 | 1.25 | 1.25 | 1.25 | 1.25 | 1.25 |
| Evaluation result | | | | | | | | | | | | | |
| Brittle temperature (°C) | -37 | -38 | -35 | -31 | -51 | -29 | -44 | -39 | -40 | -38 | -43 | -37 | -35 |
| Index of tackiness during building | 95 | 90 | 101 | 99 | 80 | 87 | 106 | 100 | 97 | 100 | 105 | 110 | 92 |
| Index of air barrier property | 163 | 165 | 132 | 127 | 155 | 145 | 141 | 149 | 153 | 154 | 153 | 146 | 135 |

The results of Tables 1 to 3 show that the tire of the present invention is excellent in air barrier property and crack resistance at low temperature, without relying on phosphorus resource.

**Claims**

1. A tire having an inner liner composed of a rubber composition comprising:

   1 to 30 parts by mass of an aliphatic dibasic acid ester, and
   8 to 30 parts by mass of a resin with a softening point of 60°C or higher, based on 100 parts by mass of a rubber component including at least one selected from the group consisting of butyl rubber, halogenated butyl rubber, and isoprene-based rubber,

   wherein the rubber composition has a brittle temperature of -35°C or lower.

2. The tire of claim 1, wherein a content of the butyl rubber and/or halogenated butyl rubber in the rubber component is 81 to 100% by mass.

3. The tire of claim 1, wherein a content of an epoxidized natural rubber having an epoxidation rate of 10 to 50 mol% in the rubber component is 90% by mass or more.

4. The tire of any one of claims 1 to 3, wherein the resin comprises 5 to 20 parts by mass of a mixed resin.

5. The tire of any one of claims 1 to 4, wherein a theoretical molecular weight of the aliphatic dibasic acid ester is 150 or more, and a flash point thereof is 100°C or higher.

6. The tire of any one of claims 1 to 5, wherein a carbon number of an alcohol substituent of the aliphatic dibasic acid ester is 5 or more.

**Patentansprüche**

1. Reifen mit einem Innerliner, der aus einer Kautschukzusammensetzung zusammengesetzt ist, umfassend:

   1 bis 30 Masseteile eines Esters einer aliphatischen dibasischen Säure, und
   8 bis 30 Masseteile eines Harzes mit einem Erweichungspunkt von 60°C oder höher, bezogen auf 100 Masseteile einer Kautschukkomponente, die zumindest eine umfasst, die aus der Gruppe ausgewählt ist, die aus Butylkautschuk, halogeniertem Butylkautschuk und Kautschuk auf Isopren-basis besteht,

   wobei die Kautschukzusammensetzung eine Versprödungstemperatur von -35°C oder niedriger aufweist.

2. Reifen nach Anspruch 1, wobei ein Gehalt des Butylkautschuks und/oder des halogenierten Butylkautschuks in der Kautschukkomponente 81 bis 100 Masse-% beträgt.

3. Reifen nach Anspruch 1, wobei ein Gehalt eines epoxidierten Naturkautschuks mit einer Epoxidationsrate von 10 bis 50 Mol-% in der Kautschukkomponente 90 Masse-% oder mehr beträgt.

4. Reifen nach einem der Ansprüche 1 bis 3, wobei das Harz 5 bis 20 Masseteile eines gemischten Harzes umfasst.

5. Reifen nach einem der Ansprüche 1 bis 4, wobei ein theoretisches Molekulargewicht des Esters einer aliphatischen dibasischen Säure 150 oder mehr beträgt und sein Siedepunkt 100 °C oder höher ist.

6. Reifen nach einem der Ansprüche 1 bis 5, wobei eine Kohlenstoffzahl eines Alkoholsubstituenten des Esters einer aliphatischen dibasischen Säure 5 oder mehr beträgt.

**Revendications**

1. Pneumatique ayant un doublage intérieur composé d'une composition au caoutchouc comprenant :

   1 à 30 parties en masse d'un ester acide aliphatique dibasique, et
   8 à 30 parties en masse d'une résine avec un point de ramollissement de 60° C ou plus, basé sur 100 parties en masse d'un composant caoutchouc incluant au moins un caoutchouc sélectionné parmi le groupe comprenant du caoutchouc au butyle, du caoutchouc au butyle halogéné, et du caoutchouc à base d'isoprène,

   dans lequel la composition au caoutchouc présente une température de fragilisation de -35° C ou moins.

2. Pneumatique selon la revendication 1, dans lequel une teneur de caoutchouc au butyle et/ou de caoutchouc au butyle halogéné dans le composant au caoutchouc est de 81 à 100 % en masse.

3. Pneumatique selon la revendication 1, dans lequel une teneur d'un caoutchouc naturel époxydé ayant un taux d'époxydation de 10 à 30 moles % dans le composant au caoutchouc est de 90 % en masse ou plus.

4. Pneumatique selon l'une quelconque des revendications 1 à 3, dans lequel la résine comprend 5 à 20 parties en masse d'une résine mélangée.

5. Pneumatique selon l'une quelconque des revendications 1 à 4, dans lequel un poids moléculaire théorique de l'ester acide aliphatique dibasique est de 150 ou plus, et un point éclair de celui-ci est de 600° C ou plus.

6. Pneumatique selon l'une quelconque des revendications 1 à 5, dans lequel un nombre d'atomes de carbone d'un substituant alcool de l'ester acide aliphatique dibasique est de 5 ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013236876 A
- WO 2006009002 A
- JP 2008038028 A
- WO 2006071311 A1
- WO 2004044052 A1
- EP 2108526 A1
- WO 2012106027 A1
- JP 4026617 B
- JP 2110182 A
- GB 2113692 B